# EUROPÄISCHE PATENTANMELDUNG

(11) **EP 1 260 270 A1**
(43) Veröffentlichungstag der Anmeldung: **27.11.2002**
(21) Anmeldenummer: 02009343.1
(22) Anmeldetag: 03.05.2002
(51) Int. Cl.: B01J 31/24, C07F 15/00

(54) **Herstellung und Verwendung von Palladium Katalysatoren für Kreuzkupplungsreaktionen**

(30) Priorität: 16.05.2001 DE 10123884
(71) Anmelder: BAYER AG, 51368 Leverkusen (DE)
(72) Erfinder: Rodefeld, Lars, Dr., 51375 Leverkusen (DE); Höpfner, Thomas, Dr., 41472 Neuss (DE); Reisinger, Claus-Peter, Dr., Ann Arbor, MI 48105 (US)

(57) **Zusammenfassung**

Die Erfindung betrifft ein Verfahren zur Herstellung von dosierbaren Lösungen oder Dispersionen von Palladium-Katalysatoren, diese Lösungen oder Dispersionen, und ihre Verwendung in Kreuzkupplungsreaktionen.

## Beschreibung

Die Erfindung betrifft ein Verfahren zur Herstellung von substituierten aromatischen Verbindungen durch Palladium-katalysierte Kreuzkupplungsreaktionen unter Verwendung neuartiger, dosierbarer Palladium(II)-Katalysatoren, die, wie ein Verfahren zu ihrer Herstellung, ebenfalls Bestandteil der Erfindung sind.

Sowohl Pd(0)- als auch Pd(II)-Verbindungen werden, oftmals unter Stabilisierung mit Phosphin-Liganden, als Katalysatoren für Kreuzkupplungsreaktionen von Aromaten eingesetzt. Technisch wichtige Kreuzkupplungsreaktionen sind zum Beispiel Carbonylierungen, Heck-Reaktionen, Suzuki-Kupplungen und Alkin-Kupplungen.

Zur diesen Verwendungen ist in der Literatur bereits der Einsatz einer breiten Vielfalt von Liganden, Palladiumverbindungen und Zusätzen beschrieben worden, um höchst mögliche Ausbeuten und Reaktionsgeschwindigkeiten zu erzielen. Zusammenfassend wird dies beispielsweise beschrieben in: R. F. Heck, "Palladium Reagents in Synthesis", Academic Press, London 1985.

Im Katalysezyklus von Palladium-katalysierten Kreuzkupplungen ist ein wichtiger Schritt die oxidative Addition einer durch Liganden stabilisierten Pd(0)-Spezies an einen Halogen-Aromaten oder Aryl-Sulfonate. (siehe L. S. Hegedus in "Organometallic Synthesis" Hrsg. M. Schlosser, 1994, Wiley & Sons. Chichester.)

Da Pd(0)-Spezies direkt ohne vorgelagerten Reaktionsschritt am Katalysezyklus teilnehmen können, ist deren Einsatz im Labormaßstab vorteilhaft. Einfache, kommerziell verfügbare Pd(0)-Verbindungen wie z.B. Pd(PPh₃)₄ haben jedoch den Nachteil, dass sie extrem oxidationsempfindlich sind und durch ihre verminderte Lagerfähigkeit, insbesondere als Lösungen, technisch nur mit hohem Aufwand einsetzbar sind. Darüber hinaus sind solche Verbindungen thermisch sehr sensibel, so dass bei Umsetzungen reaktionsträger Aromaten bei höheren Temperaturen eine schnelle Desaktivierung des Katalysators unter Ausscheidung von Palladiumschwarz erfolgt (siehe auch Fitton et al., J. Organomet. Chem., 1971, 28, 287-291, Dufaud et al., J. Chem. Soc., Chem. Commun, 1990, 426-427).

Wird als Katalysator keine Pd(0)-Verbindung, sondern eine chemisch stabilere Pd(II)-Verbindung wie z.B. Pd(OAc)₂ oder (PPh₃)₂PdCl₂ eingesetzt, dann wird dieses in einem ersten undefinierten Schritt zum Beispiel in der Reaktion mit Triphenylphosphin zu einer Pd(0)-Spezies umgesetzt, um dann wie oben beschrieben am Katalysezyklus teilzunehmen (siehe auch "Comprehensive Organometallic Chemistry", Vol. 8, Pergammon Press, p. 801, 862).

Diese in situ Herstellung von Pd(0)-Spezies ist technisch der gebräuchlichste Ansatz. Der Nachteil hierbei ist jedoch, dass die katalytisch aktive Spezies erst nach einer gewissen Induktionszeit auftritt und die exakte Steuerung einer Reaktion somit erschwert wird.

Auch der Einsatz von Produkten der oxidativen Addition von Halogenaromaten an Palladium(0)-Spezies als Katalysatoren für Palladium-katalysierte Kreuzkupplungen ist beschrieben worden (siehe Heck et al., J. Org. Chem., 1974, 39, 3327-3331). Der Katalysator wird dabei in fester Form zugegeben.

In der Technik ist diese Form der Zugabe allerdings von Nachteil insofern, als dass eine genaue Dosierung und die sofortige homogene Verteilung des Katalysators in der Reaktionsmischung erschwert wird, sowie die technisch durchgeführte Dosierung eines Feststoffes, vor allem gegen Druck, dem Fachmann als schwierig bekannt ist.

Lösungen oder Suspensionen von katalytisch aktiven Palladium-Verbindungen besitzen diese Nachteile nicht, neigen jedoch schon bei Raumtemperatur beim Stehenlassen zur Zersetzung unter Abscheidung von Palladiumschwarz.

Es bestand daher das Bedürfnis, leicht dosierbare Lösungen oder Dispersionen von Palladium-Katalysatoren für den Einsatz in Kreuzkupplungsreaktionen zu finden, die ohne Zwischenisolierung hergestellt werden können. Darüber hinaus sollen solche Lösungen oder Dispersionen temperaturstabil und ohne besondere Schutzmaßnahmen lagerstabil sein, sowie direkt am Katalysezyklus teilnehmen können.

Es wurde nun ein Verfahren zur Herstellung von dosierbaren Lösungen oder Dispersionen von Palladium-Katalysatoren des Typs [Pd(Aryl)L₂X] gefunden, wobei Aryl für einen gegebenenfalls substituierten Arylrest, L für einen Phosphinliganden oder L₂ zusammen für einen Bisphosphinliganden und X für ein Anion steht, das dadurch gekennzeichnet ist, dass
- ein gegebenenfalls mehrfach substituierter Chlor-, Brom- oder Iodaromat oder ein Arylsulfonat,
- ein Phosphin oder Diphosphinligand,
- und ein Palladiumsalz der allgemeinen Formeln

   PdY₂ oder PdY₂L'₂ oder M₂[PdY₄],

   in denen
   Y für jeweils ein Monoanion einer Säure steht
   oder
   Y₂ zusammen für ein Dianion einer Säure steht und
   L' für jeweils ein Olefin, ein Nitril, ein Phosphin,
   oder
   L'₂ zusammen für ein Diolefin, ein Dinitril oder ein Diphosphin steht und
   M für jeweils ein Alkalimetallion, Ammoniumion, organisches Ammoniumion
   oder organisches Phosphoniumion steht,
- in Gegenwart eines Lösungsmittels
   miteinander umgesetzt werden.

Bei den gegebenenfalls mehrfach substituierten Chlor-, Brom- oder Iodaromaten oder Arylsulfonaten kann es sich beispielsweise um solche handeln, deren zugrundeliegendes aromatisches Gerüst 6 bis 18 Gerüstatome aufweist wie beispielsweise Phenyl, Naphthyl, Anthracenyl, Phenanthryl oder Biphenygerüste

Mögliche weitere Substituenten sind beispielsweise: Hydroxy, Chlor, Fluor, C₁-C₆-Alkyl, C₁-C₆-Alkoxy, C₁-C₆-Fluoralkyl, C₁-C₆-Chloralkyl, C₁-C₆-Fluoralkoxy, C₁-C₆-Chloralkoxy, Tri-C₁-C₆-alkyl-siloxyl, Formyl, C₁-C₆-Acyl, Nitro, Cyano, Carboxy, NR'₂-, -CO₂-(C₁-C₆-Alkyl)-, -CONR'₂-, -OCO-(C₁-C₆-Alkyl)-, -NR'CO(C₁-C₆-Alkyl)-, wobei R', auch unabhängig voneinander, jeweils für Wasserstoff, C₁-C₆-Alkyl oder C₆-C₁₀-Aryl stehen kann.

Von diesen weiteren Substituenten können jeweils einer oder mehrere, gleiche oder verschiedene vorhanden sein, beispielsweise pro Arylrest bis zu drei Stück.

Bevorzugt sind für das erfindungsgemäße Verfahren gegebenenfalls mehrfach substituierte Halogenaromaten oder Arylsulfonate der Formel (I), 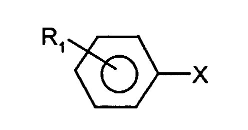 in der
- R¹: für Wasserstoff, Methyl, Ethyl, n-Propyl, iso-Propyl, n-Butyl, iso-Butyl, tert.-Butyl, n-Pentyl, n-Hexyl oder Cyclohexyl, C₁-C₆-Alkoxy, Phenacyl, Nitro, Trifluormethyl, Carboxyl, C₁-C₆-Acyl-, Cyano, CO₂-(C₁-C₆-Alkyl)- oder CO₂-Phenyl- steht, und unabhängig davon
- X: für Chlor, Brom, Iod, Trifluormethansulfonyl oder p-Trifluormethan-phenylsulfonyl steht.

Besonders bevorzugt sind Verbindungen gemäß Formel (I)
in der
- R¹: für Cyano, Acetyl oder Nitro und unabhängig davon
- X: für Brom, Trifluormethansulfonyl oder p-Trifluormethanphenylsulfonyl steht.

Ganz besonders bevorzugt ist 4-Acetyl-brombenzol.

Für das erfindungsgemäße Verfahren sind als Liganden L Phosphine der Formel (II) bevorzugt

P(R²)₃ , (II)

wobei
die Reste R² unabhängig voneinander für geradkettiges, verzweigtes oder cyclisches C₁-C₆-Alkyl oder für durch R³ substituiertes Phenyl- oder durch R³ substituiertes Naphtyl- stehen, wobei
- R³: für Wasserstoff, geradkettiges, verzweigtes oder cyclisches C₁-C₆-Alkyl, geradkettiges, verzweigtes oder cyclisches C₁-C₆-Alkoxy, Fluor-, NH₂-, HN(C₁-C₆-Alkyl)-, -N(C₁-C₆-Alkyl)₂-, -CO₂-(C₁-C₆-Alkyl)-, -CON(C₁-C₆-Alkyl)₂-, -OCO-(C₁-C₆-Alkyl)-, -NHCO(C₁-C₆-Alkyl)-, Cyano-, C₁-C₆-Acyl-, Nitro-, Hydroxy- oder Formyl- steht,
oder als Liganden L₂ Diphosphine der Formel (III)

(R²)₂P-A-P(R²)₂ (III)

wobei die Reste
- R²: unabhängig voneinander die unter Formel (II) beschriebene Bedeutung haben und
- A: für einen unsubstituierten oder substituierten C₁-C₄-Alkylen-Rest oder für einen unsubstituierten oder substituierten 1,2-Phenyl-Rest oder für einen unsubstituierten oder substituierten 1,2-Cyclohexyl-Rest oder für einen unsubstituierten oder substituierten 1,1'- oder 1,2-Ferrocenyl-Rest oder einen substituierten 2,2'-(1,1'-Biphenyl)-Rest steht.

Besonders bevorzugt sind Triphenylphosphin, Tri(o-tolyl)phosphin, Tri-(p-tolyl)-phosphin und Bis-(diphenylphosphino)ethan (DPPE).

Ganz besonders bevorzugt ist Triphenylphosphin.

Als Palladiumsalze werden bevorzugt solche der allgemeinen Formel (IVa)

PdY₂ (IVa)

eingesetzt, wobei
- Y: für Chlorid, Bromid, Acetat, Methansulfonat oder Trifluormethansulfonat steht,
oder Palladiumsalze der allgemeinen Formel (IVb)

PdY₂L'₂ (IVb)

in der
- Y: die vorstehende Bedeutung besitzt und
- L': jeweils für Acetontril, Benzonitril oder Benzylnitril steht, oder
- L'₂: zusammen für 1,5-Cyclooctadien steht,
oder Palladiumsalze der allgemeinen Formel (IVc)

M₂[PdY₄] , (IVc)

wobei
- Y: für Chlorid oder Bromid steht und
- M: für Lithium, Natrium, Kalium, Ammonium oder organisches Ammonium steht.

Besonders bevorzugt ist Palladiumacetat.

Als Lösungsmittel für die Synthese des Katalysators können beispielsweise geradkettige und cyclische aliphatische Ether wie tert.-Butyl-methyl-ether, Tetrahydrofuran, 1,4-Dioxan und Diethylether, Ketone wie Aceton, Butylmethylketon, Diethylketon sowie dipolar-aprotische Lösungsmittel wie Dimethylsulfoxid, Acetonitril, Dimethylformamid und N-Methylpyrrolidon eingesetzt werden.

Bevorzugt ist die Verwendung von 1,4-Dioxan, Dimethylformamid, Aceton und Dimethylsulfoxid.

Besonders bevorzugt ist 1,4-Dioxan.

Bei der Herstellung der Lösung oder Dispersion des Katalysators können beispielsweise 0,8 bis 1,2 Äquivalente eines Aromaten der Formel (I) bezogen auf das Palladiumsalz der allgemeinen Formel (IVa,b,c) eingesetzt werden, bevorzugt 0,9 bis 1,1 Äquivalente und besonders bevorzugt 0,97 bis 1.03 Äquivalente.

Der jeweilige Phosphanligand kann beispielsweise in solchen Mengen eingesetzt werden, dass das molare Verhältnis von Phosphor zu Palladium von 2:1 bis 8:1 bevorzugt 2:1 bis 6:1 beträgt.

Die einzusetzende Lösungsmittelmenge kann zum Beispiel so gewählt werden, dass die Lösung oder Dispersion des Katalysators 0,001 bis 0,2 mol/l, bevorzugt 0,01 bis 0,05 Mol/l Palladium enthält.

Die Temperatur zur Herstellung der Lösung oder Dispersion des Katalysators kann beispielsweise 50 bis 200°C, bevorzugt 80 bis 120°C betragen.

Der Druck bei der Herstellung der Lösung oder Dispersion des Katalysators ist unkritisch und kann zum Beispiel 0,01 bis 10 bar betragen. Bevorzugt sind 0,1 bis 2 bar, besonders bevorzugt 0,9 bis 1,1 bar. Die angegebenen Druckwerte sind absolute Druckwerte.

Auf erfindungsgemäße Weise werden Lösungen und Dispersionen von Palladium-Katalysatoren der allgemeinen Formel (V) in einem organischen Lösungsmittel erhalten,

[Pd(Aryl)L₂X] (V)

in der Aryl für gegebenenfalls substituiertes Phenyl
X für das Anion einer Säure
und L für jeweils einen Phosphanligand oder
L₂ zusammen für einen Bisphosphanligand steht.

Bevorzugt sind Lösungen oder Dispersionen von Palladiumkomplexen der Formel
(V) in einem organischen Lösungsmittel, in der
Aryl die unter Formel (I) genannte Bedeutung besitzt und unabhängig davon
L die unter Formel (II) genannte Bedeutung besitzt oder
L₂ die unter Formel (III) genannte Bedeutung besitzt und unabhängig davon
X für Chlorid, Bromid, Iodid, Acetat, Trifluormethansulfonyl oder p-Trifluormethanphenyl-sulfonyl steht.

Ganz besonders bevorzugt ist eine Lösung von Bis(triphenylphosphino)-(4-acetylphenyl)-palladium(II)-bromid in Dioxan.

Erfindungsgemäß hergestellte Lösungen oder Dispersionen können ohne vorherige Isolierung problemlos über mehrere Tage gelagert und direkt einer Kreuzkupplungsreaktion zudosiert werden.

Überraschenderweise zeigten sich die Lösungen oder Dispersionen der Katalysatoren als besonders standstabil. Selbst nach Wochen Lagerzeit unter Luft nahm die katalytische Wirksamkeit nicht ab. Auch eine Ausfällung von elementarem Palladium, z.B. als Palladiumschwarz, konnte nicht beobachtet werden.

Die erfindungsgemäßen Lösungen oder Dispersionen der Palladium-Katalysatoren können beispielsweise in Reaktionen wie der Suzuki-Kupplung, der Alkin-Kupplung, verschiedenen Carbonylierungen und Heck-Reaktionen eingesetzt werden.

Beispielsweise können die erfindungsgemäßen Lösungen oder Dispersionen der Palladium-Katalysatoren vorteilhaft in einem Verfahren zur Herstellung von aromatischen Alkinen der Formel (VIII) eingesetzt werden, 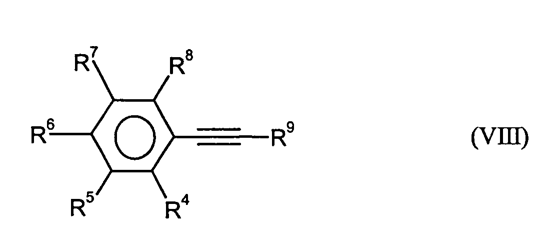 in der
- R⁴ bis R⁸: unabhängig voneinander Wasserstoff, C₁-C₈-Alkyl, (C₁-C₈)-Alkoxy-, O-Phenyl, Phenyl-, Fluor-, Chlor-, -OH, -CN, -COOH, -NH₂, -NH(C₁-C₁₂)Alkyl, -N(C₁-C₁₂)-Alkyl₂, C-Hal₃, -NHCO-(C₁-C₈)-Alkyl, CO-(C₁-C₈)-Alkyl, COO-(C₁-C₁₂)-Alkyl, CONH₂, CO-(C₁-C₁₂)-Alkyl, NHCOH, NCOO-(C₁-C₈)-Alkyl, CO-Phenyl, COO-Phenyl, (C₁₋₄)-CO₂-(C₁₋₈)-Alkyl, (C₁₋₄)-CO₂H, PO-Phenyl₂, PO-(C₁-C₈)-Alkyl₂, 5-Ring-Heteroaryl, 6-Ring-Heteroaryl bedeuten kann wobei das Heteroatom aus der Gruppe Stickstoff, Schwefel und Sauerstoff ausgewählt ist und in der
- R⁹: unabhängig davon für Wasserstoff C₁-C₈-Alkyl, (C₁-C₈)-Alkoxy- und Phenyl- stehen kann, indem man Halogenaromaten oder Arylhalogenide der Formel (VI) 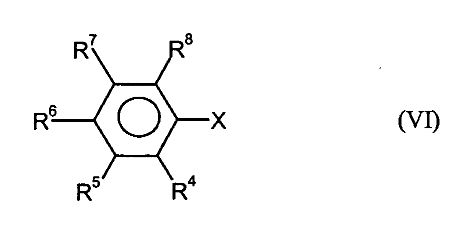 in der
- R⁴ bis R⁸: die oben angegebene Bedeutung besitzen und
- X: für Chlor, Brom, Iod, Trifluormethansulfonyl oder p-Trifluormethanphenyl-sulfonyl oder Methansulfonyl oder p-Toluolsulfonyl steht,
mit Acetylenen der Formel (VII) umsetzt,

HC≡CR⁹ (VII)

in der
- R⁹: die oben angegebene Bedeutung besitzt.

Weiterhin können die erfindungsgemäßen Lösungen oder Dispersionen der Palladium-Katalysatoren beispielsweise vorteilhaft in einem Verfahren zur Herstellung von aromatischen Olefinen der Formel (X) eingesetzt werden, 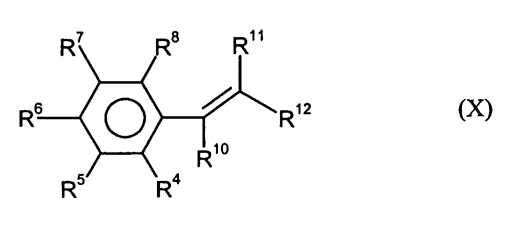 in der
- R⁴ bis R⁸: oben genannte Bedeutung besitzen
und unabhängig davon R¹⁰ für Wasserstoff, C₁-C₈-Alkyl, (C₁-C₈)-Alkoxy-, Phenyl-, Fluor- und
- R¹¹ und R¹²: unabhängig davon für Wasserstoff, C₁-C₈-Alkyl, (C₁-C₈)-Alkoxy-, O-Phenyl, Phenyl-, Fluor-, Chlor, -CN, -COOH, -CHO, -NH₂, -NH(C₁-C₁₂)-Alkyl, -N(C₁-C₁₂)-Alkyl₂, C-Hal₃, -NHCO-(C₁-C₈)-Alkyl, CO-(C₁-C₈)-Alkyl, COO-(C₁-C₁₂)-Alkyl, CONH₂, CO-(C₁-C₁₂)-Alkyl, NHCOH, NCOO-(C₁-C₈)-Alkyl, CO-Phenyl, COO-Phenyl, (C₁₋₄)-CO₂-(C₁₋₈)-Alkyl, (C₁₋₄)-CO₂H, PO-Phenyl₂, PO-(C₁-C₈)-Alkyl₂, 5-Ring-Heteroaryl, 6-Ring-Heteroaryl, wobei das Heteroatom aus der Gruppe Stickstoff, Schwefel und Sauerstoff ausgewählt, stehen können,
indem man Halogenaromaten der Formel (VI), in denen R⁴ bis R⁸ und X oben angegebene Bedeutung besitzen, mit Olefinen der Formel (IX) 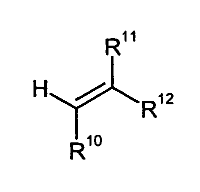 in der
- R¹⁰, R¹¹ und R¹²: die oben angegebene Bedeutung besitzen,
in Gegenwart der erfindungsgemäßen Lösungen oder Dispersionen Palladium-Katalysatoren umsetzt.

Weiterhin können die erfindungsgemäßen Lösungen oder Dispersionen der Palladium-Katalysatoren beispielsweise vorteilhaft in einem Verfahren zur Herstellung von Bisarylverbindungen der Formel (XII) eingesetzt werden, 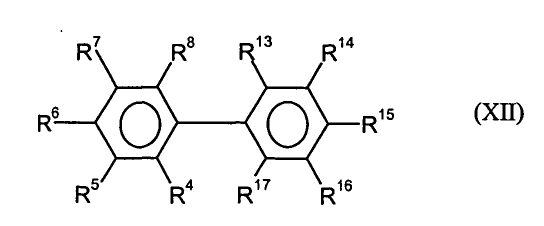 in der
- R⁴ bis R⁸: die oben genannte Bedeutung besitzen und in der
- R¹³ bis R¹⁶: unabhängig voneinander und von R⁴ bis R⁸ die Bedeutungen besitzen können, die für R⁴ bis R⁸ oben genannt worden sind,
indem man Halogenaromaten der Formel (VI), in denen R⁴ bis R⁸ und X die oben angegebene Bedeutung besitzen, mit Arylbor-Derivaten der Formel (XI) 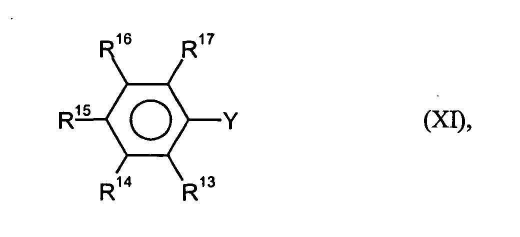 in der
- R¹³ bis R¹⁶: unabhängig voneinander die Bedeutung haben können, die für R⁴ bis R⁸ oben genannt sind und
- Y: für B(OH)₂ oder B(O-(C₁-C₆)-Alkyl)₂ steht,
in Gegenwart der erfindungsgemäßen Lösungen oder Dispersionen von Palladium-Katalysatoren umsetzt.

Weiterhin können die erfindungsgemäßen Lösungen oder Dispersionen der Palladium-Katalysatoren beispielsweise vorteilhaft in einem Verfahren zur Herstellung von aromatischen Carbonsäurederivaten der Formel (XIV) eingesetzt werden 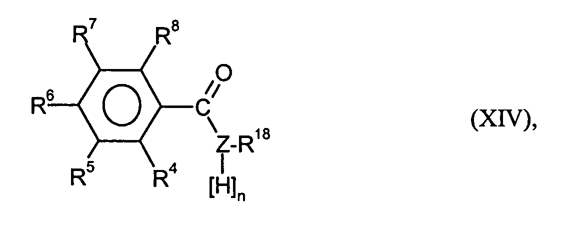 in der
- R⁴ bis R⁸: die oben genannte Bedeutung besitzen
und unabhängig davon Z für Sauerstoff oder Stickstoff steht und abhängig davon für n = 0 für Z = Sauerstoff und n = 1 für Z = Stickstoff steht und R¹⁸ unabhängig davon für Wasserstoff, verzweigt oder unverzweigt lineares oder cyclisches C₁-C₈-Alkyl, oder substituiertes Phenyl- stehen kann,
indem man Halogenaromaten der Formel (VI) in denen R⁴ bis R⁸ und X oben angegebene Bedeutung besitzen,
mit Kohlenmonoxid und
mit Verbindungen der Formel der Formel (XIII)

[H]ₙ-Z-R¹⁸

in der
- Z und R¹⁸: oben angegebene Bedeutung haben, und abhängig davon
- n = 1: für Z = Sauerstoff und n = 2 für Z = Stickstoff ist,
in Gegenwart der erfindungsgemäßen Lösungen oder Dispersionen von Palladium-Katalysatoren umsetzt.

Weiterhin können die erfindungsgemäßen Lösungen oder Dispersionen der Palladium-Katalysatoren beispielsweise vorteilhaft in einem Verfahren zur Herstellung von aromatischen Aldehyden der Formel (XV) eingesetzt werden 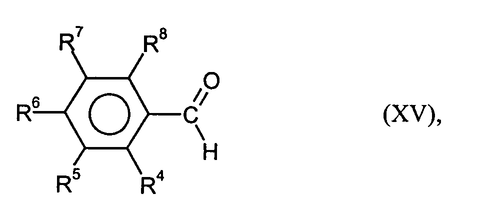 in der
R⁴ bis R⁸ die oben genannte Bedeutung besitzen
   indem man Halogenaromaten der Formel (VI) in denen R⁴ bis R⁸ und X oben angegebene Bedeutung besitzen,
   mit Kohlenmonoxid und Wasserstoff,
   in Gegenwart der erfindungsgemäßen Lösungen oder Dispersionen von Palladium-Katalysatoren umsetzt.

Für die erfindungsgemäße Herstellung von substituierten Aromaten können als Lösungsmittel beispielsweise aromatische Lösungsmittel wie Alkyl-, Dialkyl und Trialkylbenzole, Ether wie beispielsweise Diethylether, Methyl-tert.-butylether, Tetrahydrofuran, und Dioxan, Ketone wie Aceton und Butylmethylketon, Ester von aliphatischen Carbonsäuren wie Essigsäureethylester und Essigsäurebutylester, Dimethylsulfoxid, N,N-Dialkylamide von aliphatischen Carbonsäuren wie Dimethylformamid und Essigsäuredimethylamid oder alkylierte Lactame wie N-Methylcaprolactam und N-Methylpyrrolidon, Trialkylamine wie Triethylamin und Alkohole wie Methanol, Ethanol, iso-Propanol, n-Butanol, tert.-Butanol, iso-Butanol, Pentanole und Hexanole oder Mischungen davon eingesetzt werden.

Die erfindungsgemäße Herstellung von Substituierten Aromaten kann beispielsweise so erfolgen, dass insgesamt 0,001 bis 5 mol%, bevorzugt, 0,01 bis 2 mol% besonders bevorzugt 0,1 bis 1 mol% der erfindungsgemäßen Lösungen oder Suspensionen der Palladium-Katalysatoren zu den Reaktionsmischungen zugegeben werden.

Dabei können beispielsweise 0 bis 80 % der Katalysatorlösung bereits in der Reaktionslösung vorgelegt werden und der Rest zu 100 % während der Reaktion addiert werden.

Der Dosierzeitraum kann hierbei angepasst an die Reaktionsgeschwindigkeit gewählt werden und sowohl wenige Minuten als auch mehr als 12 Stunden betragen.

Die bei Reaktion entstehende Säure HX kann durch Zusatz einer Base, insbesondere eines Amins oder eines Alkali- oder Erdalkalimetallsalzes einer schwachen Säure abgefangen werden. Bevorzugt ist der Einsatz von Tri-n-butylamin und Natriumacetat sowie Natriumcarbonat.

Die Menge der Base-Äquvalente ist in weiten Bereichen unkritisch und kann beispielsweise zwischen 0,5 und 3, bevorzugt zwischen 0,9 und 1.1 Äquivalenten liegen.

Weiterhin können der Reaktionsmischung beispielsweise 0,1 bis 10 Äquivalente der Phosphane der Formeln (II) und/oder (III) zusätzlich zugegeben werden.

Zusätzlich können der Reaktionslösung Salze von Halogeniden und Pseudohalogeniden der Alkali-, Erdalkalimetalle und Metallen der 6. bis 8. Nebengruppe zugesetzt werden.

Ebenso können zum Beispiel Tri- oder Tetraalkylammonium, -phosphonium oder -arsoniumsalze der Reaktionslösung zugesetzt werden.

Die Reaktionstemperaturen können beispielsweise im Bereich von 20 bis 200°C, bevorzugt im Bereich von 60 bis 180°C und besonders bevorzugt im Bereich von 90 bis 150°C liegen.

Die Reaktion kann bei Drücken zwischen 1 bar und 100 bar, bevorzugt 1 bis 16 bar durchgeführt werden.

Bei Carbonylierungen kann der CO-Druck beispielsweise 0,1 bis 100 bar betragen, bevorzugt sind 1 bar bis 20 bar, besonders bevorzugt 3 bis 12 bar.

Bei der Herstellung von aromatischen Aldehyden kann der Wasserstoffdruck beispielsweise 0,1 bis 100 bar betragen, bevorzugt sind 1 bar bis 20 bar.

Nach Beendigung der Reaktion kann das Palladium des Katalysators als Palladiumsalz und Palladiumschwarz zum Beispiel durch Filtration zurückgewonnen werden. Diese Filtration kann beispielsweise mit einem Aktivkohlefilter erfolgen.

Ein besonderer Vorteil der Erfindung ist, dass die Reaktionen bei höheren Temperaturen durchgeführt werden können, weil durch Nachdosierung von Katalysator die mit der Temperatur zunehmende Desaktivierung des Katalysators ausgeglichen werden kann.

### Beispiele

Die folgenden Beispiele dienen nur der beispielhaften Erläuterung und sind für den Umfang der Erfindung weder in Hinsicht auf die apparative Durchführung noch auf die gewählten Substrate begrenzend zu verstehen.

### Beispiel 1

In einer 1 Liter doppelmantelbeheizten Dosiervorlage werden 800 g 1,4-Dioxan vorgelegt und bei Raumtemperatur 5 mal durch wechselweises Evakuieren auf 100 mbar und anschließendes Belüften mit Stickstoff inertisiert. Unter Stickstoffspülung werden anschließend 3,2 g Palldium(II)acetat, 18,9 g Triphenylphosphin und 2,9 g 4-Brom-acetophenon hinzugefügt. Die Mischung wird 1 h auf Rückfluss erhitzt und anschließend 1 h bei Rückflusstemperatur nachgerührt. Die so hergestellte Lösung kann direkt als Katalysator eingesetzt werden.

### Beispiel 2 Carbonylierung

In einem 16 1 Pfaudler-Stahlemail-Reaktor werden 1443,1 g 4-Brom-butyryl-otoluidin, 37,8 g Triphenylphosphin, 1248,0 g Tri-n-butylamin und 5060,0 g Methanol vorgelegt. Die Reaktionsmischung wird 3 mal durch Evakuieren auf 100 mbar und anschließendes Belüften mit Stickstoff unter Rühren inertisiert. Anschließend wird erneut evakuiert und auf den Reaktor bis auf 2 bar ca. 28 g Kohlenmonoxid aufgedrückt. Die Reaktionslösung wird auf 115°C erhitzt und anschließend der Druck über weiteres Aufpressen von CO bis auf 8 bar gebracht. Über 8 Stunden werden hierzu 825 g der in Beispiel 1 hergestellten Katalysatorlösung zugepumpt. Nach der Dosierung lässt man nachrühren, bis kein CO mehr aufgenommen wird. Sollte nicht ausreichend CO aufgenommen worden sein, so kann Katalysatorlösung nachdosiert werden. Die Mischung wird entspannt, mit Stickstoff gespült und auf 50°C abgekühlt. Hierbei fällt ein gelber Feststoff aus. Die Suspension wird über einen Aktiv-Kohle-Filter mit vorgelegtem Papierfilter filtriert. Die erhaltene Reaktionslösung enthält nach HPLC-Analyse 1177,1 g (89,3 %) (N-Butyryl)-4-amino-3-methylbenzoesäuremethylester.

### Beispiel 3 Heck-Reaktion

Zu 50 g N,N-Dimethylacetamid werden 11,01 g p-Brombenzoesäuremethylester, 6,09 g Acrylsäuremethylester und 4,52 g Natriumacetat gegeben. Die Apparatur wird mit Stickstoff gespült und inertisiert. Bei 130°C werden zu dieser Lösung 13,4 g der Katalysator-Lösung aus Beispiel 1 gegeben und 14 h gerührt. Anschließend wird eine Probe genommen. Nach quantitativer GC-Analyse enthält die Probe 7,91 g (72%) p-Carboxy-methyl-zimtsäuremethylester.

### Beispiel 4 Suzuki-Kupplung

In 40 ml Xylol werden 5,08 g p-Bromacetophenon, 3,45 g Benzolboronsäure und 6,91 g Kaliumcarbonat vorgelegt und mit Stickstoff inertisiert. Anschließend werden bei 120°C 3,38 g Katalysator-Lösung aus Beispiel 1 hinzudosiert. Man lässt insgesamt 9 h bei 120°C reagieren, lässt abkühlen und wäscht den Ansatz mit Wasser. Eine Probe enthält nach quantitativer GC-Analyse 4,76 g (97 %) 4-Acetoxybiphenyl.

### Beispiel 5 Alkin-Kupplung

8,12 g p-Bromacetophenon und 5,0 g Phenylacetylen werden in 120 ml Triethylamin gelöst und mit Stickstoff inertisiert. Bei 90 °C werden 0,03 g Kupfer(I)-bromid hinzugegeben und 5,41 g der Katalysatorlösung aus Beispiel 1 hinzudosiert. Man lässt 6 h bei 90°C rühren und gibt anschließend erneut 60 ml Triethylamin und 5,4 g der Katalysator-Lösung hinzu. Nach weiteren 3 h Reaktionszeit wird abgekühlt und vom Feststoff filtriert. Die organische Phase wird einrotiert und in Dichlormethan erneut aufgenommen. Eine quantitative GC-Analyse enthält 8,37 g (95 %) 4-Acetoxytolan.

## Patentansprüche

1. Verfahren zur Herstellung von dosierbaren Lösungen oder Dispersionen von Palladium-Katalysatoren der Formel
[Pd(Aryl)L₂X],
wobei
Aryl für einen unsubstituierten oder substituierten Arylrest,
L für jeweils einen Phosphinliganden oder
L₂ für einen Bisphosphinliganden und
X für ein Anion steht
**dadurch gekennzeichnet, dass**
- ein gegebenenfalls substituierter Chlor-, Brom- oder Iodaromat oder ein Arylsulfonat,
- ein Phosphin oder Diphosphinligand,
- und ein Palladiumsalz der allgemeinen Formeln
PdY₂ oder PdY₂L'₂ oder M₂[PdY₄],
in denen
Y für jeweils ein Anion einer Säure steht
oder
Y₂ für ein Dianion einer Säure steht und
L' für jeweils ein Olefin, ein Nitril, ein Phosphin,
oder
L'₂ für ein Diolefin, ein Dinitril oder ein Diphosphin steht und
M für jeweils ein Alkalimetallion, Ammoniumion, organisches Ammoniumion oder organisches Phosphoniumion steht,
- in Gegenwart eines Lösungsmittels
miteinander umgesetzt werden.

2. Verfahren nach Anspruch 1, **dadurch gekennzeichnet, dass** es sich bei dem gegebenenfalls weiter substituierten Chlor-, Brom- oder Iodaromat oder ein Arylsulfonat um Verbindungen der Formel (I) handelt 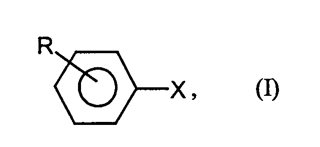 in der
R für Methyl, Ethyl, n-Propyl, iso-Propyl, n-Butyl, iso-Butyl, tert.-Butyl, n-Pentyl, n-Hexyl oder Cyclohexyl, C₁-C₆-Alkoxy, Phenacyl, Nitro, Trifluormethyl, Carboxyl, C₁-C₆-Acyl-, -CO₂-(C₁-C₆-Alkyl) oder -CO₂-Phenyl steht, und unabhängig davon
X für Chlor, Brom, Iod, Trifluormethansulfonyl, Methansulfonyl, p-Trifluormethanphenylsulfonyl oder p-Toluolsulfonyl steht.

3. Verfahren nach den Ansprüchen 1 bis 2, **dadurch gekennzeichnet, dass** Phosphane des Typs P(R²)₃ eingesetzt werden, wobei
die Reste R² unabhängig voneinander für geradkettiges, verzweigtes oder cyclisches C₁-C₆-Alkyl
oder für R³-Phenyl oder R³-Naphtyl stehen, wobei
R³ für geradkettiges, verzweigtes oder cyclisches C₁-C₆-Alkoxy, Fluor, NH₂, HN(C₁-C₆-Alkyl)-, N(C₁-C₆-Alkyl)₂-, CO₂-(C₁-C₆-Alkyl)-, CON(C₁-C₆-Alkyl)-, OCO-(C₁-C₆-Alkyl)-, NCO(C₁-C₆-Alkyl)-, Cyano, C₁-C₆-Acyl-, Nitro, Hydroxy oder Formyl steht,
oder **dass** Bisphosphine des Typs (R²)₂P-A-P(R²)₂ eingesetzt werden, wobei R² die vorstehende Bedeutung hat und
A für einen unsubstituierten oder substituierten C₁-C₄-Alkylen-Rest oder
für einen unsubstituierten oder substituierten 1,2-Phenyl-Rest oder
für einen unsubstituierten oder substituierten 1,2-Cyclohexyl-Rest oder
für einen unsubstituierten oder substituierten 1,1- oder 1,2-Ferrocenyl-Rest oder für einen substituierten 2,2'-(1,1'-Biphenyl)-Rest steht.

4. Verfahren nach den Ansprüchen 1 bis 3, **dadurch gekennzeichnet, dass** Palladiumsalze PdY₂ eingesetzt werden, wobei
Y für Chlorid, Bromid, Acetat, Methansulfonat oder Trifluormethansulfonat steht,
oder **dass** Palladiumsalze PdY₂L₂ eingesetzt werden , wobei
Y die oben angegebene Bedeutung hat und
L' für Acetontril, Benzonitril oder Benzylnitril steht, oder
L'₂ zusammen für 1,5-Cyclooctadien steht,
oder **dass** Palladiumsalze M₂[PdY₄] eingesetzt werden, wobei
M für Lithium, Natrium, Kalium oder Ammonium und
Y für Chlorid oder Bromid steht.

5. Verfahren nach den Ansprüchen 1 bis 4, **dadurch gekennzeichnet, dass** als Lösungsmittel N,N-Dimethylformamid, Aceton, Dimethylsulfoxid oder 1,4-Dioxan eingesetzt wird.

6. Verfahren nach den Ansprüchen 1 bis 5, **dadurch gekennzeichnet, dass** als Lösungsmittel 1,4-Dioxan eingesetzt wird.

7. Verfahren nach den Ansprüchen 1 bis 6, **dadurch gekennzeichnet, dass** die Umsetzung bei einer Temperatur von 50°C bis zum Siedepunkt des Lösungsmittels, höchstens jedoch 120°C durchgeführt wird.

8. Verfahren nach den Ansprüchen 1 bis 6, **dadurch gekennzeichnet, dass** die Reaktionslösung nach der Umsetzung durch Zusatz von Lösungsmittel weiter verdünnt wird.

9. Lösungen oder Dispersionen von Palladium-Katalysatoren der allgemeinen Formel (V),
[Pd(Aryl)L₂X] , (V)
in der
Aryl für einen unsubstituierten oder substituierten Arylrest,
L für einen Phosphinliganden oder
L₂ zusammen für einen Bisphosphinliganden
X für Chlorid, Bromid, Iodid oder ein Sulfonat steht.

10. Lösungen oder Dispersionen von Palladium-Katalysatoren gemäß dem Anspruch 9, **dadurch gekennzeichnet, dass** in der allgemeinen Formel (V) Aryl für Phenylgruppen steht, die durch
Cyano, geradkettiges oder verzweigtes C₁-C₄-Acyl, Phenacyl, Nitro, Trifluormethyl, Carboxyl, geradkettiges oder verzweigtes C₁-C₆-Alkylcarboxyl oder Phenylcarboxyl substituiert sind.

11. Lösungen oder Dispersionen von Palladium-Katalysatoren gemäß den Ansprüchen 9 bis 10, **dadurch gekennzeichnet, dass** in der allgemeinen Formel (V)
L für Phosphane P(R²)₃ steht, wobei die Reste R² unabhängig voneinander für geradkettiges, verzweigtes oder cyclisches C₁-C₆-Alkyl oder R³-Phenyl oder R³-Naphtyl stehen, wobei
R³ für geradkettiges, verzweigtes oder cyclisches C₁-C₆-Alkoxy, Fluor, NH₂, HN(C₁-C₆-Alkyl)-, N(C₁-C₆-Alkyl)₂-, CO₂-(C₁-C₆-Alkyl)-, CON(C₁-C₆-Alkyl)-, OCO-(C₁-C₆-Alkyl)-, NCO(C₁-C₆-Alkyl)-, Cyano, C₁-C₆-Acyl-, Nitro, Hydroxy oder Formyl steht,
oder in der
L₂ zusammen für Bisphosphane des Typs (R²)₂P-A-P(R²)₂ steht, wobei die Reste
R² unabhängig voneinander die vorstehend angegebene Bedeutung haben und
A für einen unsubstituierten oder substituierten C₁-C₄-Alkylen-Rest oder für einen unsubstituierten oder substituierten 1,2-Phenyl-Rest oder für einen unsubstituierten oder substituierten 1,2-Cyclohexyl-Rest steht, oder für einen unsubstituierten oder substituierten 1,2- oder 1,1'-Ferrocenyl-Rest oder einen unsubstituierten oder substituierten 2,2'-(1,1'-Binaphtyl)-Rest steht.

12. Lösungen oder Dispersionen von Palladium-Katalysatoren gemäß den Ansprüchen 9 bis 11, **dadurch gekennzeichnet, dass** in der allgemeinen Formel (V)
X für Chlorid, Bromid, Iodid, Methansulfonat, Trifluormethylsulfonat, p-Nitrophenylsulfonat, p-Trifluormethylphenylsulfonat oder p-Toluolsulfonat steht.

13. Verwendung von Lösungen oder Dispersionen gemäß den Ansprüchen 9 bis 12 als Katalysatoren.

14. Verfahren zur Herstellung substituierter Aromaten durch Kreuzkupplungsreaktionen, **dadurch gekennzeichnet, dass** man Lösungen oder Dispersionen von Palladium-Katalysatoren gemäß den Ansprüchen 9 bis 12 verwendet.

15. Verfahren zur Herstellung von Arylalkinen aus gegebenenfalls substituierten Halogenaromaten oder Arylsulfonaten und höchstens monosubstituierten Alkinen, **dadurch gekennzeichnet, dass** man Lösungen oder Dispersionen von Palladium-Katalysatoren gemäß den Ansprüchen 9 bis 12 verwendet.

16. Verfahren zur Herstellung von Bisarylen aus gegebenenfalls substituierten Halogenaromaten oder Arylsulfonaten und Aryl-Borsäurederivaten, **dadurch gekennzeichnet, dass** man Lösungen oder Dispersionen von Palladium-Katalysatoren gemäß den Ansprüchen 9 bis 12 verwendet.

17. Verfahren zur Herstellung von Arylalkenen aus gegebenenfalls substituierten Halogenaromaten oder Arylsulfonaten und höchstens dreifach substituierten Alkenen, **dadurch gekennzeichnet, dass** man Lösungen oder Dispersionen von Palladium-Katalysatoren gemäß den Ansprüchen 9 bis 12 verwendet.

18. Verfahren zur Herstellung von aromatischen Aldehyden aus gegebenenfalls substituierten Halogenaromaten oder Arylsulfonaten und Kohlenmonoxid und Wasserstoff, **dadurch gekennzeichnet, dass** man Lösungen oder Dispersionen von Palladium-Katalysatoren gemäß den Ansprüchen 9 bis 12 verwendet.

19. Verfahren zur Herstellung von Arylcarbonsäurederivaten aus gegebenenfalls substituierten Halogenaromaten oder Arylsulfonaten, Kohlenmonoxid und Alkoholen oder primären Aminen, **dadurch gekennzeichnet, dass** man Lösungen oder Dispersionen von Palladium-Katalysatoren gemäß den Ansprüchen 9 bis 12 verwendet.

20. Verfahren nach den Ansprüchen 14 bis 19, **dadurch gekennzeichnet, dass** die Reaktionstemperatur 20 bis 200°C beträgt.

21. Verfahren nach Anspruch 20, **dadurch gekennzeichnet, dass** die Reaktionstemperatur 60 bis 180°C beträgt.

22. Verfahren nach den Ansprüchen 14 bis 21, **dadurch gekennzeichnet, dass** der Reaktionslösung eine Base zugesetzt wird.

23. Verfahren gemäß den Ansprüchen 14 bis 22, **dadurch gekennzeichnet, dass** der in der Reaktionslösung vorhandene Gehalt an Palladium oder Palladiumverbindungen durch Filtration wiedergewonnen wird.
